# EUROPEAN PATENT APPLICATION

(11) **EP 1 605 718 A1**
(43) Date of publication of application: **14.12.2005**
(21) Application number: 03710373.6
(22) Date of filing: 14.03.2003
(51) Int. Cl.: H04Q 7/34

(54) **PARENT MOBILE DEVICE, CHILD MOBILE DEVICE, HOME LOCATION REGISTER DEVICE, AND MOBILE SWITCHING CENTER**

(71) Applicant: FUJITSU LIMITED, Kawasaki-shi, Kanagawa 211-8588 (JP)
(72) Inventor: SHIMOMINAMI, Yoko, Fujitsu Limited, Kawasaki-shi, Kanagawa 211-8588 (JP); NODA, Yukihiro, Fujitsu Limited, Kawasaki-shi, Kanagawa 211-8588 (JP); AIKAWA, Shinichiro, Fujitsu Limited, Kawasaki-shi, Kanagawa 211-8588 (JP); DOMON, Toru, c/o Fujitsu Mobile Comm. Techn. Ltd., Kita-ku Sapporo-shi Hokkaido 060-0807 (JP)
(74) Representative: HOFFMANN EITLE
(86) International application number: PCT/JP2003/003117
(87) International publication number: WO 2004/082312

(57) **Abstract**

Concentrated use of wireless resources by location registrations carried out by slave mobile stations all together when a plurality of slave mobile stations present in a moving body provided with a master mobile station while bridging adjacent location registration areas is prevented. For this purpose, a mobile communications system 1 comprises: at least a broadcast information transmitting function unit (21) for notifying to the slave mobile stations (3) that the slave mobile stations are slaved to the master mobile station (2), a link maintaining function unit (31) for holding master-slave relationships, home location registers (5, 6) provided with expansion areas (52, 62) for holding the mobile station link information, and a mobile station link information forwarding function unit (41) for forwarding the address information of the master mobile station (2).

## Description

### TECHNICAL FIELD

The present invention relates to a mobile communications system, more particularly relates to a mobile communications system having as mobile stations a master mobile station and a plurality of slave mobile stations having a master-slave relationship with the master mobile station.

In mobile communications, the location of a mobile station is not fixed, therefore, in order to establish communications with a mobile station at the time of call reception at the mobile station, it is necessary for the network side to previously perform location registration and constantly manage the current location of each mobile station.

The location information of the mobile stations is managed in a home location register (HLR) in units of regional sections referred to as "location registration areas". These location registration areas are linked with mobile switching centers (MSCs). In this case, generally subscriber information of each mobile station is downloaded from the HLR to a visitor location register (VLR) provided in the mobile switching center (MSC) which the mobile station is visiting.

Location registration is carried out from individual mobile stations with respect to the network whenever (i) the mobile station is turned on and whenever (ii) the mobile station (except one in communication) moves bridging location registration areas.

In recent years, users utilizing mobile communications have increased. The amount of data used for the communications has also been increasing. However, there is a limit to the wireless resources between the mobile stations and the base stations, so various methods have been investigated for efficiently utilizing the wireless resources.

The present invention proposes a means for improvement of the technique of location registration of mobile stations in order to efficiently utilize these wireless resources.

### BACKGROUND ART

Conventionally, when there are a plurality of mobile stations in a moving body such as a ship, airplane, train, bus, or other vehicle (hereinafter simply referred to as a "vehicle") and these mobile stations uniformly move bridging location registration areas, at the point of time when they bridge the location registration areas, all mobile stations in the vehicle individually perform location registration with respect to the network. For example, all mobile stations in a vehicle traveling in a location registration area (A) will individually perform location registration with respect to the network at the point of time when they bridge the location registration areas, whereby all location information of these mobile stations will be updated to a location registration area (B) of the destination of movement. That is, individual location registrations from the mobile stations will be carried out substantially all together. Accordingly, when the vehicle bridges the location registration areas, the wireless resources of the cell which the mobile stations are visiting will be used by all of the mobile stations substantially all together, so there will be the problem that the wireless resources will not be efficiently utilized.

In order to solve such a problem, there are the following Non-patent Documents 1 and 2. Here, a "chain type location registration method" is disclosed.

This "chain type location registration method" solves the above problem of a large number of users boarding a vehicle such as a train or a bus move simultaneously in the same direction and the mobile stations in the vehicle simultaneously perform location registration at the border of the location registration areas resulting in a large amount of location registration traffic concentratedly occurring with respect to the network. The method is characterized in that the mobile stations in for example a train become slaved to a mobile radio station disposed in the train.

### [Non-patent Document 1]

"Basic Concept of Chain Type Location Registration (B-5-53)", paper presented at 2001 Institute of Electronics, Information, and Communication - Communication Society Convention, page 339.

### [Non-patent Document 2]

"Chain Type Location Registration (B-5-143)", paper presented at 2001 Institute of Electronics, Information, and Communication - General Convention, page 541.

### [Non-patent Document 3]

"Location Information Management Method in Chain Type Location Registration (B-5-144)" paper presented at 2001 Institute of Electronics, Information, and Communication - General Convention, page 542.

There are the following problems under the above technical background.

Namely, when a mobile station originates a call, the mobile switching center (MSC/VLR) which the mobile station is visiting must confirm the additional services etc. of the mobile station. For this reason, the mobile switching center (MSC/VLR) requires the subscriber information of the mobile station.

However, the "Chain Type Location Registration" of the above [Non-patent Documents] does not clarify the method for obtaining the subscriber information of the slave mobile stations and the method for forwarding the information while slave mobile stations and a master mobile station (mobile radio station) are in a master-slave relationship (chain relationship). That is, it does not consider the call origination/call reception operations of the slave mobile stations in a state where a master-slave relationship is held.

### DISCLOSURE OF THE INVENTION

An object of the present invention is to provide a specific communication technique for establishing call origination/call reception operations of slave mobile stations in a state where there are a plurality of slave stations in a moving body (vehicle) provided with a master mobile station and where the master mobile station and the slave mobile stations hold a master-slave relationship.

To attain the above object, the present invention proposes a specific mechanism for a mobile switching center (MSC/VLR) which the mobile stations are visiting to obtain the subscriber information of the mobile stations and further for another mobile switching center (MSC/VLR) of the destination of movement to obtain the subscriber information of the master mobile station and the slave mobile stations along with the movement of the master mobile station and the slave mobile stations.

The mechanism is roughly comprised of the following three mechanisms (I), (II), and (III).

### (I) Mechanism I

The subscriber information of the master mobile station existing in the home location register HLR is expanded and a list of the slave mobile stations having a master-slave relationship with the master mobile station is introduced. This list is prepared by acknowledgement of slave mobile station registration requests to the HLR of the master mobile station from the mobile switching center (MSC/VLR) which the slave mobile stations having a master-slave relationship are visiting when a master-slave relationship is established between slave mobile stations and the master mobile station. Address information such as the telephone numbers of the slave mobile stations forwarded from this mobile switching center (MSC/VLR) is recorded in the subscriber information expansion portion in HLR of the master mobile station.

### (II) Mechanism II

When establishing a master-slave relationship between the slave mobile stations and the master mobile station, the home location register HLR of the slave mobile stations receiving requests for registration of location information from the slave mobile stations registers the address information of the master mobile station in the expanded portion of the subscriber information of the slave mobile stations. Further, the subscriber information of the slave mobile stations is forwarded from the HLR of the slave mobile stations to the mobile switching center (MSC/VLR) which the slave mobile stations are visiting.

### (III) Mechanism III

When the master mobile station moves to the destination of the movement while bridging location registration areas, and location registration is carried out from this master mobile station, as an acknowledgement to a request for registration of location information from the other mobile switching center of the destination of the movement of this master mobile station, a list of all slave mobile stations having a master-slave relationship with the master mobile station is forwarded to the other mobile switching center (MSC/VLR) of the destination of movement from the home location register of the master mobile station. The mobile switching center (MSC/VLR) of the destination of movement obtains the subscriber information of the slave mobile stations from the HLR of the slave mobile stations based on the list of the slave mobile stations.

By providing the above mechanisms I, II, and III, the following functions are realized.

Since the subscriber information of the master mobile station includes a list of the slave mobile stations, even when the master mobile station moves bridging location registration areas, a request for forwarding the subscriber information concerning the slave mobile stations can be carried out from the other mobile switching center (MSC/VLR) of the destination of movement to the home location registers HLR of the slave mobile stations. Therefore, by forwarding the subscriber information of the slave mobile stations from the HLRs of the slave mobile stations to the mobile switching center (MSC/VLR) of the destination of movement, the mobile switching center (MSC/VLR) which the slave mobile stations are visiting can always hold the subscriber information of the slave mobile stations.

Further, since the mobile switching center holds the subscriber information of the slave mobile stations, at the time of call origination of a slave mobile station, control of additional services based on the subscriber information becomes possible in the mobile switching center (MSC/VLR). Accordingly, call origination/call reception at a slave mobile station can be executed in a state where the master-slave relationship is maintained as it is and by exactly the same procedure as the call origination procedure of conventional mobile communications.

Thus, according to the present invention, when a slave mobile station originates a call, since the subscriber information of the slave mobile station is always held in the mobile switching center (MSC/VLR) which the slave mobile station is visiting, control of additional services based on the subscriber information can be carried out in the mobile switching center (MSC/VLR) while holding the master-slave relationship between the master mobile station and the slave mobile station as it is. Due to this, call origination/call reception by each slave mobile station becomes possible while keeping the call origination procedure of conventional mobile communications as it is.

### BRIEF DESCRIPTION OF THE DRAWINGS

FIG. 1 is a diagram showing the overall basic configuration of a mobile communications system according to the present invention;
FIG. 2 is a diagram more concretely showing the basic configuration of FIG. 1;
FIG. 3 is a diagram showing a case where a location registration area is updated in the configuration of FIG. 2;
FIG. 4 is a diagram showing a mode of registration in an HLR 5 of master mobile station subscriber information;
FIG. 5 is a diagram showing a mode of registration in an HLR 6 of slave mobile station subscriber information;
FIG. 6 is a sequential diagram showing the operation of a conventional mobile communications system (first part);
FIG. 7 is a sequential diagram showing the operation of a conventional mobile communications system (second part);
FIG. 8 is a sequential diagram for explaining a first operation mode I based on the present invention (first part);
FIG. 9 is a sequential diagram for explaining a first operation mode I based on the present invention (second part);
FIG. 10 is a sequential diagram for explaining a second operation mode II according to the present invention (first part);
FIG. 11 is a sequential diagram for explaining a second operation mode II according to the present invention (second part);
FIG. 12 is a sequential diagram for explaining a third operation mode III based on the present invention (first part);
FIG. 13 is a sequential diagram for explaining a third operation mode III based on the present invention (second part);
FIG. 14 is a sequential diagram for explaining a fourth operation mode IV based on the present invention (first part);
FIG. 15 is a sequential diagram for explaining a fourth operation mode IV based on the present invention (second part);
FIG. 16 is a sequential diagram for explaining a fifth operation mode V based on the present invention (first part);
FIG. 17 is a sequential diagram for explaining a fifth operation mode V based on the present invention (second part);
FIG. 18 is a diagram showing an example of the basic configuration of a master mobile station 2; and
FIG. 19 is a diagram showing an example of the basic configuration of a slave mobile station 3.

### BEST MODE FOR WORKING THE INVENTION

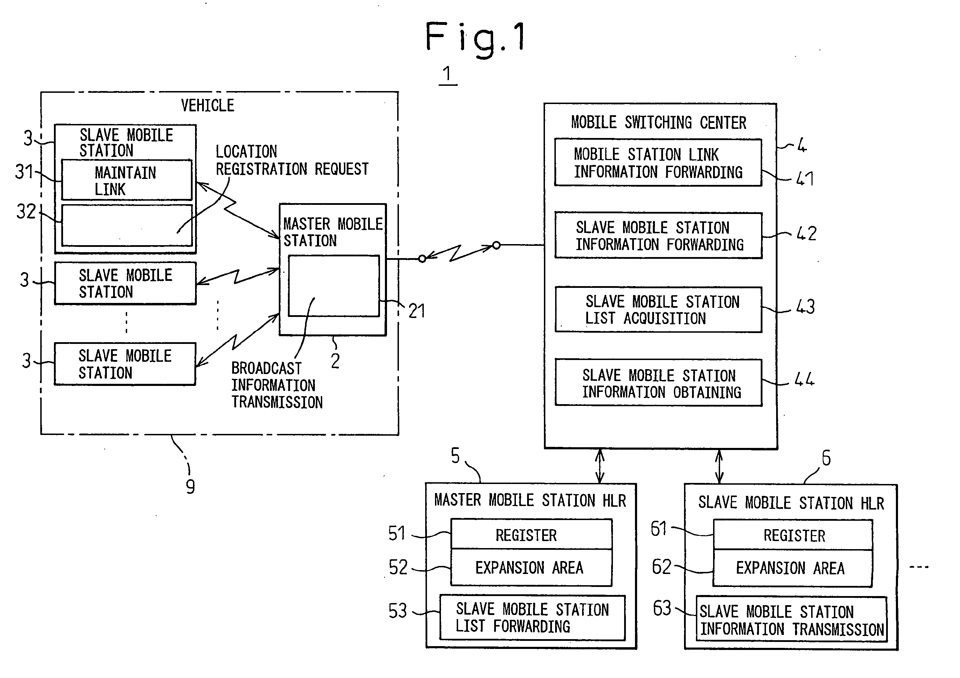

FIG. 1 is a diagram showing the overall basic configuration of a mobile communications system according to the present invention.

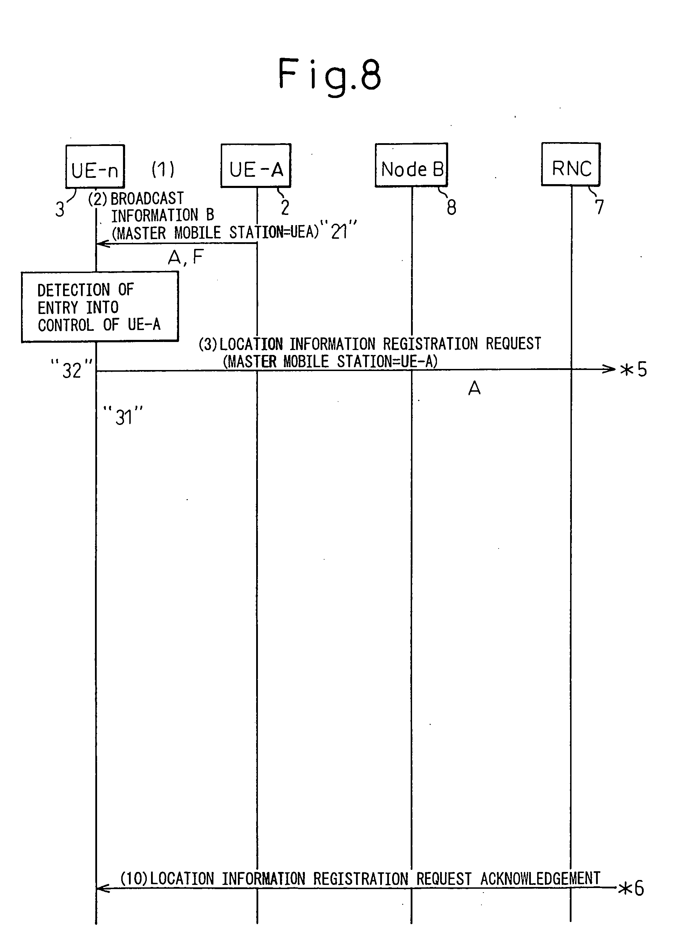

In the figure, reference numeral 1 is a mobile communications system according to the present invention. The main components of the system 1 are a master mobile station 2 provided in a vehicle 9, a plurality of slave mobile stations 3 present in the vehicle 9 and to be linked with the master mobile station 2, a mobile switching center 4 which the master mobile station 2 and the slave mobile stations 3 present in the vehicle 9 are visiting, a master mobile station home location register (HLR) 5 for holding information concerning the master mobile station 2 and each of the slave mobile stations 3 in cooperation with this mobile switching center 4, and a slave mobile station HLR 6. In further detail, they are as follows.
(1) First, when looking at the master mobile station 2, this is a master mobile station provided in a vehicle 9 moving together with the slave mobile stations 3 and is provided with a broadcast information transmitting means 21 for transmitting broadcast information (B) for broadcasting to the slave mobile stations 3 that the slave mobile stations 3 are slaved to this master mobile station 2. This broadcast information transmitting means 21 generates broadcast information (B) including master mobile station address information (A) for identifying the master mobile station 2.
   When this master mobile station 2 moves together with the vehicle 9 and bridges from the present location registration area to the location registration area of the destination of movement, it detects broadcast information (B') from the outside, that is, the location registration area of the destination of movement. At this time, the master mobile station 2 transmits a request for registration of location information for requesting the registration of the location information of the master mobile station 2 to the mobile switching center (4') corresponding to the origin of the broadcast information (B').
   The broadcast information (B') from the outside can be received not only at the master mobile station 2, but also at the slave mobile stations 3. Accordingly, each slave mobile station 3 tries to respond to the broadcast information (B') and start sending a request for registration of location information. However, when if each tries to start sending such a request, the link between the master mobile station 2 and each slave mobile station 3 will be lost and the master-slave relationship will end up being cancelled.
   Therefore, in order to continuously maintain the link with the master mobile station 2 of each slave mobile station 3, a priority flag (F) (refer to FIG. 8) is further included in the broadcast information (B) from the master mobile station 2. This priority flag (F) is a flag for indicating that the broadcast information (B) from this master mobile station 2 must be selected with priority when a plurality of broadcast information (B, B',...) compete.
(2) Next, when looking at a slave mobile station 3, this is a slave mobile station moving together with the vehicle 9 provided with the master mobile station 2 and provided with a link maintaining means 31 for maintaining the link with this master mobile station when detecting the broadcast information (B) from the master mobile station 2. This is because, after the user carrying the slave mobile station 3 boards the vehicle 9, the slave mobile station must continuously hold the master-slave relationship with the master mobile station 2.
   For this reason, when the user boards the vehicle 9, first, the slave mobile station 3 of the user must notify the corresponding mobile switching center 4, that is the master mobile station 4 to which this slave mobile station 3 is visiting, of the fact that it has become slaved to the master mobile station 2. This is realized by the location registration requesting means 32.
   Namely, the slave mobile station 3 is provided with a location registration requesting means 32 for transmitting to the corresponding mobile switching center 4 a request for registration of location information for requesting registration of the location information of the slave mobile station 3 including the master mobile station address information (A) of this master mobile station when detecting the broadcast information (B) from the master mobile station 2.
   Here, the link maintaining means 31 can maintain this link in the simplest way as follows. Namely, so far as the broadcast information (B) from the master mobile station 2 is detected, even when other broadcast information other than the broadcast information (B) is received, a request for registration of location information in response to the other broadcast information is prohibited. If a registration request of such new location information is prohibited, even if the slave mobile station is visiting a new mobile switching center 4', the slave mobile station is kept slaved to the master mobile station 2.
(3) Next, when looking at the home location register (HLR) 6, this is characterized by the following points.
   Namely, a home location register for holding in a register 61 the subscriber information (S) concerning the slave mobile stations 3 moving together with a vehicle 9 provided with a master mobile station 2 is further provided with an expansion area 62 for holding mobile station link information (L). The mobile station link information (L) includes at least the address information (A) of the master mobile station 2 with which the slave mobile stations 3 must be linked.
   The mobile station link information (L) further includes mobile station classification information (C) indicating whether a mobile station is the master mobile station, a slave mobile station, or a general mobile station not any of them.
   Further, this HLR 6 can include a slave mobile station information transmitting means 63. When a user boards a vehicle 9, the mobile station 3 of the user receives the broadcast information (B) and transmits a request for registration of location information.
   At this time, the slave mobile station information transmitting means 63 transmits the subscriber information (S) to the mobile switching center 4 receiving the request for registration of location information from this slave mobile station 3.
(4) On the other hand, when looking at the home location register (HLR) 5, it is characterized by the following points.
   Namely, a home location register 5 for holding in a register 51 the subscriber information (S) concerning a master mobile station 2 provided in a vehicle 9 moving together with the slave mobile stations 3 is further provided with an expansion area 52 for holding the mobile station link information (L). The mobile station link information (L) further includes at least address information (a1, a2,..., an) of the slave mobile stations 3 which must be linked with the master mobile station 2.
   The mobile station link information (L) further includes mobile station classification information (C) indicating whether a mobile station is the master mobile station, a slave mobile station, or a general mobile station not any of them.
   When a user boards a vehicle 9, the slave mobile station 3 of the user receives the broadcast information (B) and transmits a request for registration of location information to the mobile switching center 4 to which it is visiting at first.
   The mobile switching center 4 receiving the request for registration of location information from the slave mobile station 3 in this way transmits the slave mobile station registration request. In response to this request, the HLR 5 holds the address information (an) of this slave mobile station as the mobile station link information (L) of the master mobile station 2.
   There are two methods of receiving this information (an) at the HLR 5.
   The first method directly obtains the address information (an) of this slave mobile station from the mobile switching center 4 receiving the request for registration of location information from the slave mobile station 3 and holds this information in the HLR 5.
   The second method directly obtains the address information (an) of this slave mobile station from the HLR 6 of the slave mobile station 3 and holds this information in the HLR 5.
   Further, the home location register (HLR) 5 is provided with a slave mobile station list forwarding means 53. This slave mobile station list forwarding means 53 transmits to another mobile switching center 4' a list including the held address information (a1, a2,..., an) of slave mobile stations 3 when the master mobile station 2 moves and makes a request for registration of location information to said another mobile switching center 4'.
(5) Finally, when looking at the mobile switching center 4, the mobile switching center 4 has a mobile station link information forwarding means 41. The means 41 receives a request for registration of location information from a slave mobile station 3 moving together with the master mobile station 2 and forwards the address information (A) of the master mobile station 2 with which this slave mobile station 3 must be linked to the HLR 6 of this slave mobile station.

The mobile switching center 4 further has a slave mobile station information forwarding means 42. The means 42 forwards the slave mobile station address information (an) of this slave mobile station to the HLR 5 of the master mobile station 2 when a request for registration of location information is originated from the mobile station 3 of a user boarding a vehicle 9.

When moving from the present location registration area to the location registration area of the destination of movement along with the movement of the vehicle 9, the new mobile switching center 4' receives the newly transmitted request for registration of location information from the master mobile station 2 and acquires the list of the slave mobile stations 3 which must be linked with this master mobile station 2 from the HLR 5 of this master mobile station. This is acquired by a slave mobile station list acquisition means 43.

Here, the mobile switching center 4' obtains the subscriber information (S) of the slave mobile stations from the HLRs 6 of the slave mobile stations based on the acquired list of the slave mobile stations. This is obtained by a slave mobile station's subscriber information obtaining means 44.

### [Embodiments]

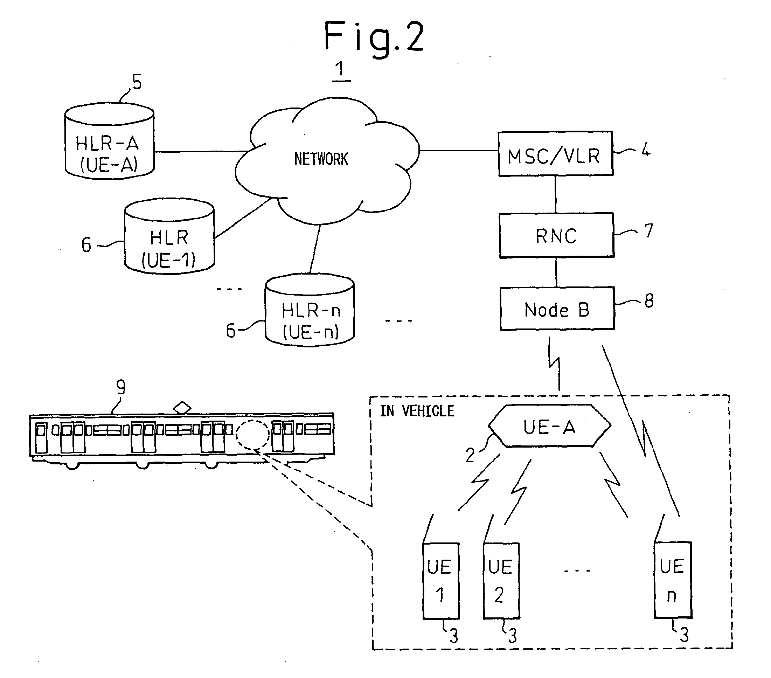

FIG. 2 is a diagram showing the basic configuration of FIG. 1 more concretely.

The overall configuration of the system 1 according to the present invention is comprised by, as in the present figure, a mobile switching station 4 formed by a mobile switching center (MSC) provided with a VLR (Visitor Location Register), a radio network controller (RNC) 7, a base station (Node-B) 8, a master mobile station (UE-A: User Equipment-A) 2, a plurality of slave mobile stations (UE-1, 2,..., n) 3, a home location register (HLR-A) 5 for registering information concerning the master mobile station 2, and home location registers (HLR-1, 2,..., n) for registering information concerning the slave mobile stations (UE-n).

The MSC (4) is a mobile switching center having the UE-A (2) under its control and is provided with a visitor location register (VLR) for recording the subscriber information S of all mobile stations 2 and 3 under its control including the UE-A. Further, the MSC can communicate with HLR-A (5) and HLR-1, 2,..., n (6) via the network.

The RNC 7 is a base station controller having the UE-A 2 under its control.

The Node-B 8 is a base station having the UE-A under its control.

The UE-A 2 is a master mobile station provided in a vehicle 9 such as a train or a bus and has a means (21) for outputting the broadcast information B.

Each UE-n (n=1, 2,...) 3 is a slave mobile station and has a receiver for receiving the above broadcast information B. Further, the UE-n includes in a request for registration of location information sent after receiving the broadcast information B the address information A indicating that the master mobile station 2 is the UE-A and transmits the same to the MSC/VLR 4. Thereafter, it prohibits the output of the request for registration of location information until the broadcast information B of the UE-A 2 can no longer be received by the UE-n 3 (means 31).

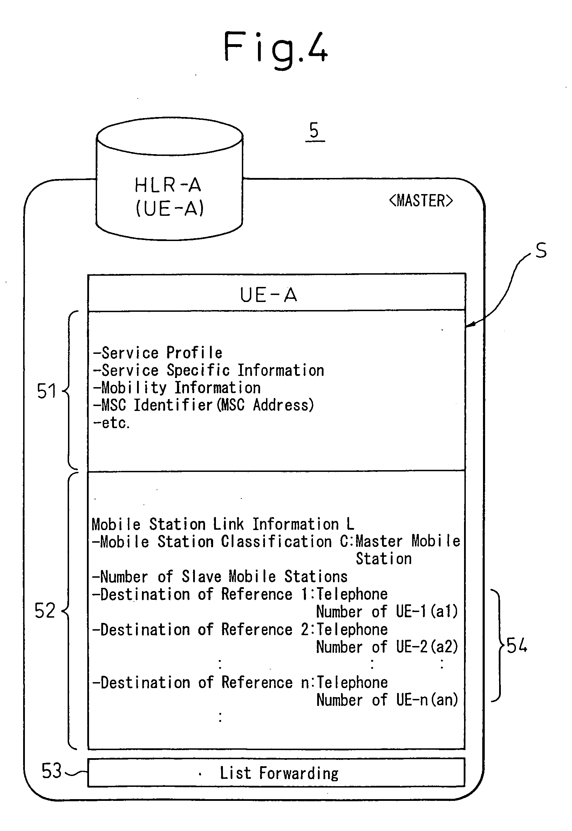

The HLR-A5 is a home location register for registering the subscriber information S of the UE-A 2 and can communicate with the MSC/VLR 4 and the HLR-n (n=1, 2,...) 6 via the network. The mode of registration of the UE-A subscriber information is shown in FIG. 4 (explained later).

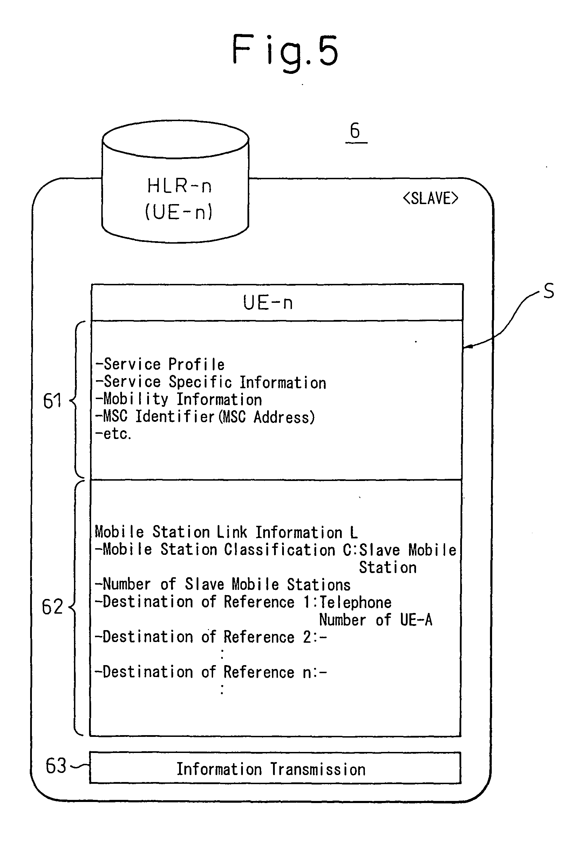

Each HLR-n 6 is a home location register for registering the subscriber information S of the corresponding UE-n 3 and can communicate with the MSC/VLR 4 and the HLR-A 5 via the network. The mode registration of the UE-n subscriber information is shown in FIG. 5 (explained later).

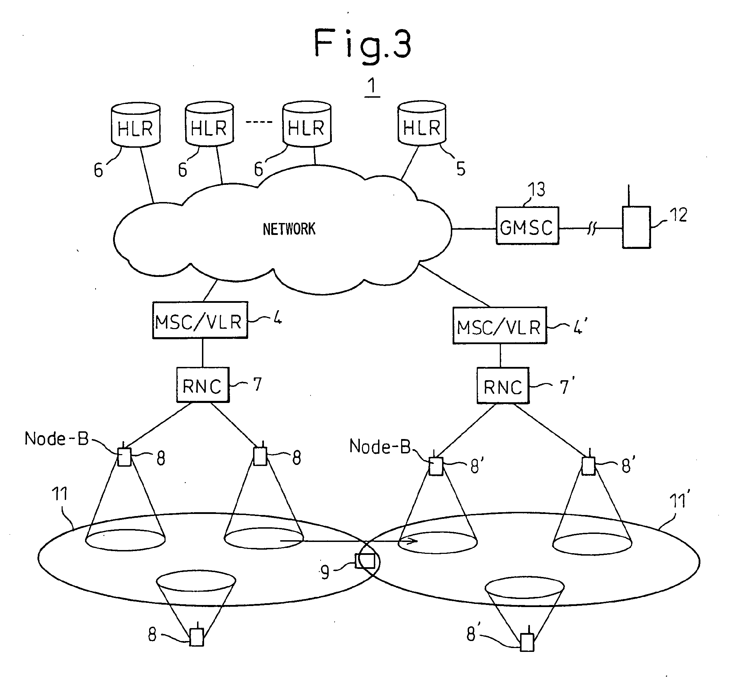

FIG. 3 is a diagram showing a case where the location registration area is updated in the configuration of FIG. 2. Note that, throughout all the figures, the same reference numerals are attached to the same components.

In the figure, reference numeral 11 is a certain location registration area. A vehicle 9 is traveling in this area 11. The location registration area 11 is a set of cells defined by at least one base station 8 (three in the example of the present figure). The location registration of the master mobile station 2 and the slave mobile stations 3 at this time is carried out with respect to the mobile switching center (MSC/VLR) 4 via the radio network controller (RNC) 7. At this time, the location information is registered at the home location registers (HLR) 5 and 6.

Here, assume that one of the slave mobile stations ("3" in FIG. 2) in the vehicle 9 receives a call reception request from another call originator 12. The corresponding gateway mobile switching center (GMSC) 13 refers to the HLRs 5 and 6, accesses the corresponding mobile switching center 4, and connects the call to the destination slave mobile station (3) via the RNC 7 and the base station 8 under its control.

While the vehicle 9 is in the same location registration area, no location registration is carried out from the mobile station, but when the slave mobile stations cross to a location registration area 11' of the destination of movement along with the movement of the vehicle 9, location registration is carried out from all slave mobile stations (3) in the vehicle 9 to the corresponding mobile switching center 4' all together (conventional system). Having such simultaneous location registration performed instead by one master mobile station (2) is the technique upon which the present invention is based.

In order to concretely realize this technique, the present invention first introduces new home location registers (HLR). This will be explained by referring to the drawings.

FIG. 4 is a diagram showing the mode of registration of the master mobile station subscriber information in the HLR 5; and

FIG. 5 is a diagram showing the mode of registration of the slave mobile station subscriber information in an HLR 6.

Referring to FIG. 4 first, the HLR 5 is configured by a register 51, an expansion area 52 thereof, and a slave mobile station list forwarding means 53 shown in FIG. 1.

The HLR 51 stores the subscriber information S as in the conventional system. On the other hand, the expansion area 52 thereof stores the mobile station link information L added according to the present invention.

The conventional subscriber information S in the HLR 51 includes "Service Profile" information, "Service Specific Information", "Mobility Information", "MSC Identifier (MSC Address)", etc. as illustrated.

On the other hand, the expansion area 52 according to the present invention stores the previously explained "mobile station link information" L.

This mobile station link information L includes at least the address information a1, a2,..., an of the slave mobile stations (UE-n: n=1, 2,...) 3 which must be linked with the master mobile station 2, for example, their telephone numbers.

Further, this mobile station link information L includes the previously explained "mobile station classification information" C indicating which of the master mobile station/slave mobile station/general mobile station the master mobile station 2 is.

Referring to FIG. 5 next, each HLR 6 is configured by a register 61, an expansion area 62 thereof, and a slave mobile station information transmitting means 63 shown in FIG. 1.

The register 61 includes "Service Profile" information etc. the same as that of the register 51 (FIG. 4).

On the other hand, the expansion area 62 according to the present invention stores the "mobile station link information" L the same as that already explained.

This information L on the slave mobile station side includes the address information A of the master mobile station 2 with which the slave mobile station 3 must be linked, for example the telephone number of the master mobile station.

Further, this mobile station link information L includes the "mobile station classification information" C indicating which of the master mobile station/slave mobile station/general mobile station the slave mobile station is.

Next, an explanation will be given of the operation of the mobile communications system 1 according to the present invention using the HLRs 5 and 6. The operation of a conventional mobile communications system will be explained first in order to clarify the characteristic features of the present invention.

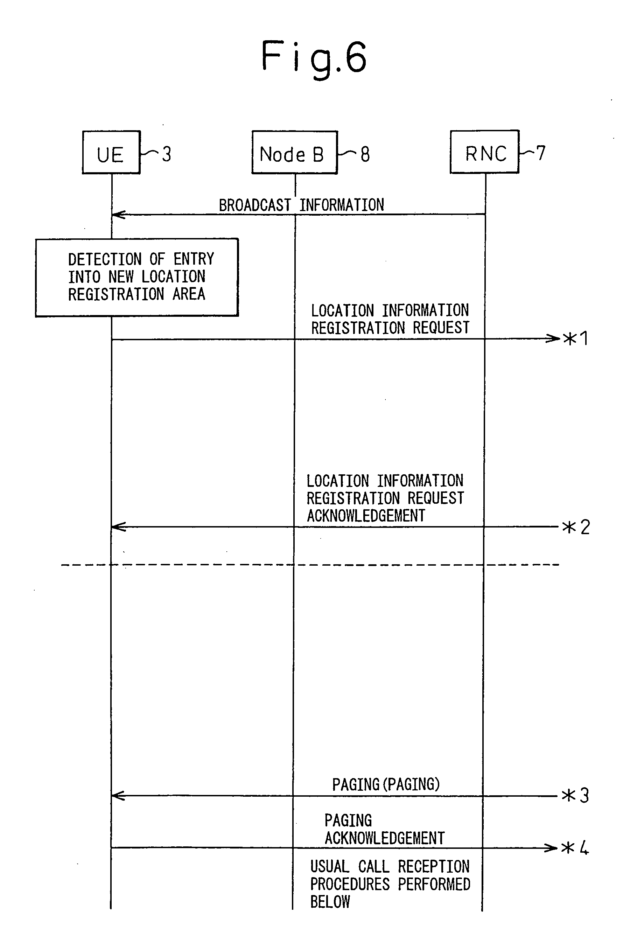

FIG. 6 is a sequential diagram showing the operation of a conventional mobile communications system (first part), and

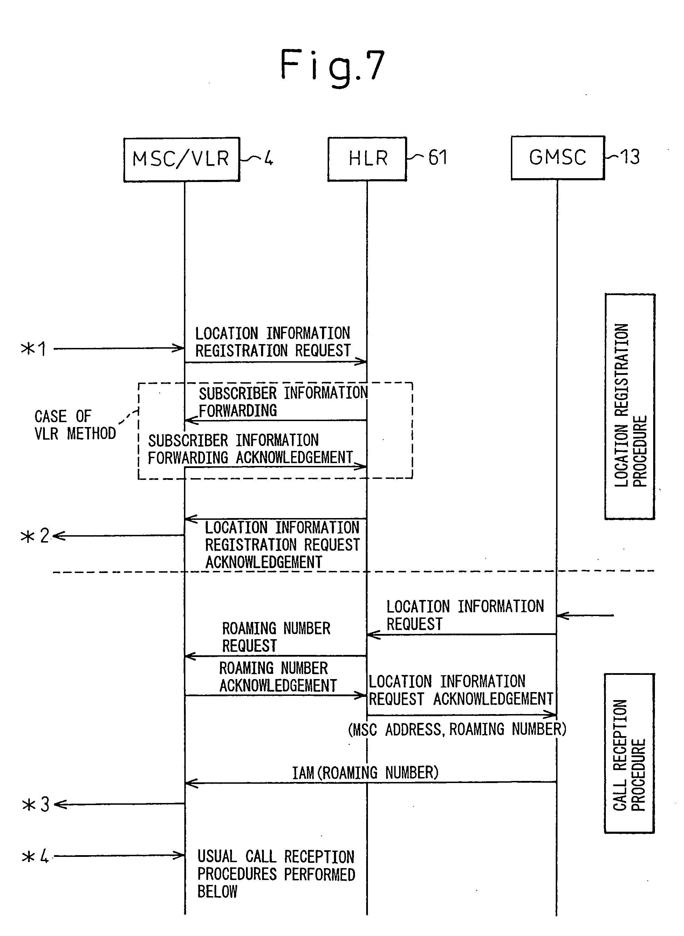

FIG. 7 is the same view as the above (second part).

Referring to FIG. 6 and FIG. 7, an explanation will be given of the location registration procedure of a conventional mobile station and the call reception procedure of a mobile station.

### <Location Registration Procedure>

When a mobile station (UE) 3 bridges the location registration areas 11 and 11' or when the mobile station is turned on, if the mobile station (UE) 3 newly receives broadcast information from the network side (radio network controller (RNC) 7), a radio channel is set up between the mobile station (UE) 3 and the radio network controller (RNC) 7, and the mobile station (UE) 3 transmits a request for registration of location information to the mobile switching center (MSC) 4.

In the case of the VLR method, the mobile switching center (MSC) 4 first requests the subscriber information of the mobile station (UE) 3 from the register 61 of the mobile station (UE) 3 and downloads the subscriber information to the visitor location register (VLR) of the mobile switching center (MSC) 4. Note that, in the case of the HLR method, this procedure is omitted.

After this, the mobile switching center (MSC) 4 returns an acknowledgement of the request for registration of location information to the mobile station (UE) 3 to notify it that the location registration was completed.

### <Call Reception Procedure>

When there is a call to the mobile station (UE) 3, the gateway mobile switching center (GMSC) 13 requests the location information from the home location register 6 of the mobile station (UE) 3. The home location register 6 acquires a roaming number for identifying the UE 3 at the MSC/VLR 4 from the visitor location register (VLR) which the mobile station (UE) 3 is visiting and obtains the address of the mobile switching center (MSC) which the mobile station (UE) 3 is visiting and the roaming number when acknowledging the location information request.

Thereafter, the gateway mobile switching center (GMSC) 13 pages the mobile station (UE) 3 at the mobile switching center (MSC) 4. The mobile station (UE) 3 responds to this so as to receive the call.

In this way, the location information of a mobile station plays an important role in the call reception procedure, so the network must constantly manage the location information of the mobile stations. Further, in the location registration procedure, from the viewpoint of efficient utilization of the wireless resources (wireless band) between the mobile stations 3 and the base station 8, it is necessary to improve the method of execution of the location registration and the mechanism thereof.

As explained above, in mobile communications, the network side must constantly manage the location information of the mobile stations. Accordingly, as previously explained, where a plurality of mobile stations 3 move while bridging the location registration areas (11, 11'), at the point of time when they bridge the location registration areas, irrespective of if these mobile stations are in communication or not, the location registration must be carried out every time with respect to the network side so far as the power of the mobile stations is on. In view of this situation, the same also applies to the case where a plurality of mobile stations uniformly move. It is necessary to perform the location registration from these mobile stations to the network side.

However, when the number of the mobile stations is large and when the vehicle 9 is for example a high speed transport means (for example a bullet train), the location registration area described above will frequently change.

As previously explained, there is a limit to the wireless resources between the mobile stations 3 and the base station 8. With the number of mobile stations 3 continuously increase, the wireless resources must be efficiently utilized in order to provide high grade communication services to a greater number of users.

That is, in the prior art, as previously explained, there is the problem that the wireless resources between mobile stations and a base station are not being efficiently utilized. The present invention proposes a specific technique for enabling efficient utilization of these wireless resources by using the mechanism of replacing the location registrations of a plurality of mobile stations with location registration of one master mobile station.

The conventional mobile communications system was explained in detail above by referring to FIG. 6 and FIG. 7, so the operation of the mobile communications system 1 according to the present invention (FIG. 1, FIG. 2, FIG. 4, and FIG. 5) will be explained in detail below based on the understanding of the conventional mobile communications system.

FIG. 8 is a sequential diagram for explaining a first operation mode I based on the present invention (first part); and

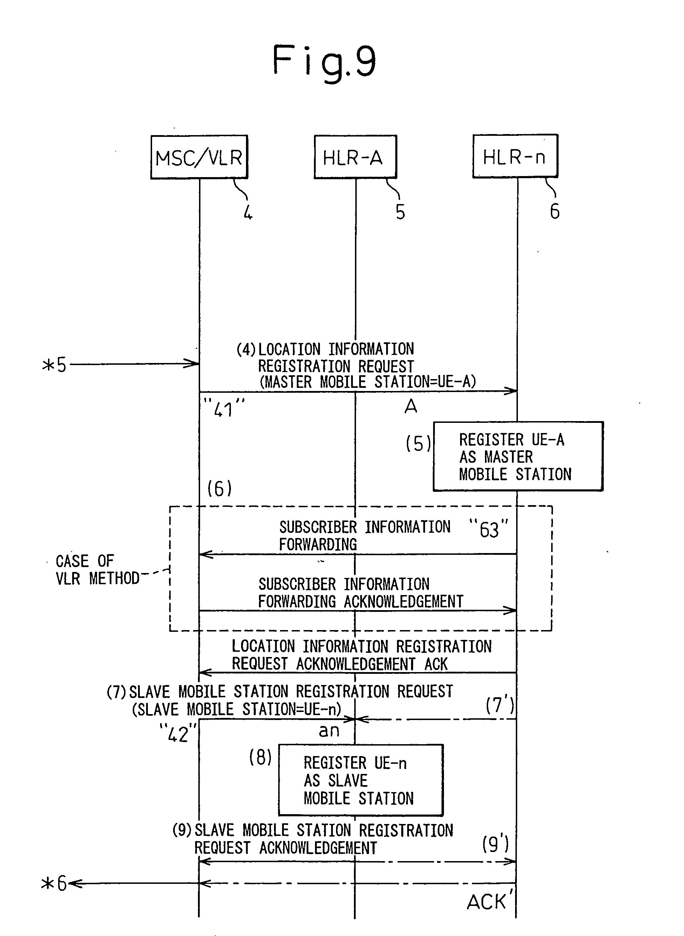

FIG. 9 is the same view as the above (second part).

### [First Operation Mode I]

This first operation mode is the operation mode where a mobile station (UE-n) 3 is brought into a vehicle 9 equipped with a master mobile station (UE-A) 2.

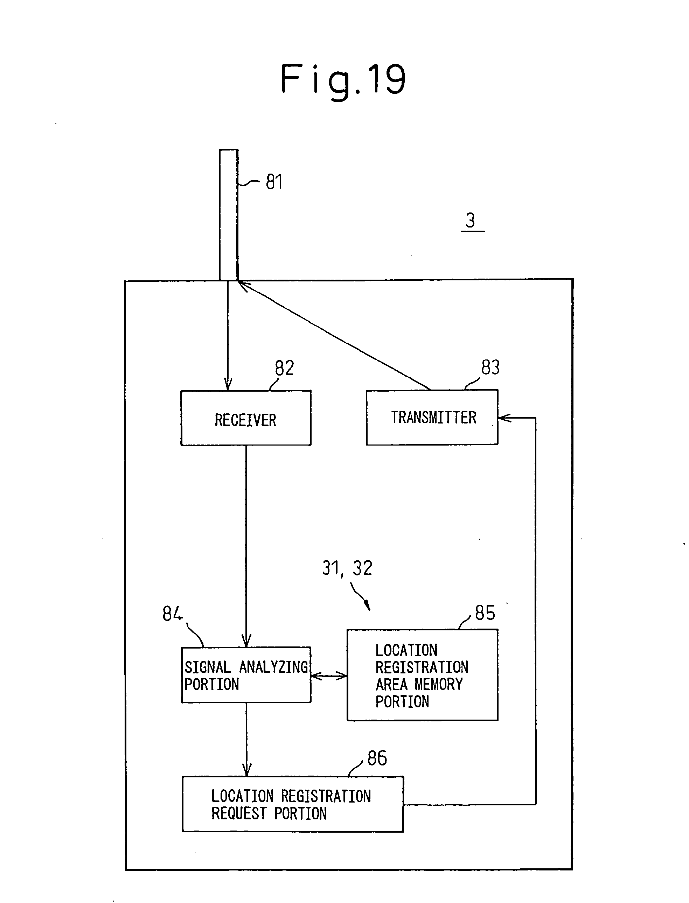

Here, an explanation will be given of the operation from when a UE-n 3 is brought into a vehicle 9 equipped with a UE-A 2 until the location is registered at the home location registers (HLR-A, HLR-n) 5 and 6 in the configuration of FIG. 1 and FIG. 2.
I-(1) A UE-n 3 is brought into a vehicle 9 equipped with a UE-A 2.
I-(2) The receiver of the UE-n 3 (82 of FIG. 19) receives the broadcast information B from the UE-A 2. This broadcast information B includes the address information A indicating that the master mobile station 2 is the UE-A, therefore the UE-n 3 detects that it has become slaved to the UE-A2.
I-(3) The UE-n 3 transmits a request for registration of location information to the MSC/VLR 4. This request for registration of location information includes the address information A indicating the "master mobile station = UE-A".
I-(4) The MSC/VLR 4 transmits the request for registration of location information to the home location register (HLR-n) 6 holding the subscriber information S of the UE-n 3 of the origin of the request for registration of location information of the procedure I-(3).
   This request for registration of location information includes the address information A indicating the "master mobile station = UE-A".
I-(5) The HLR-n 6, as shown in FIG. 5, registers the telephone number (A) designating the UE-A 2 as the master mobile station in the subscriber data area (expansion area 62) of the UE-n 3. Further, it changes the mobile station classification information C of the UE-n 3 from "general mobile station" to "slave mobile station".
I-(6) The subscriber information S of the UE-n 3 is downloaded to the VLR from 61 of the HLR-n6. An acknowledgement to the request for registration of location information is returned to the MSC/VLR 4 from the HLR-n 6.
I-(7) In order to register the UE-n 3 as a slave mobile station in the subscriber data area (expansion area 52) of the UE-A 2, the registration request of the slave mobile station is transmitted from the MSC/VLR 4 to the home location register (HLR-A) 5 of the UE-A 2. This registration request includes the address information "an" indicating the "slave mobile station = UE-n".
I-(8) In the HLR-A 5, the telephone number ("an") of the UE-n 3 designating the UE-n 3 as a slave mobile station is registered in the subscriber data area (expansion area) 52 of the UE-A 2 as shown in FIG. 4.
I-(9) When finishing registration as a slave mobile station, the HLR-A 5 returns an acknowledgement for the registration request of the slave mobile station to the MSC/VLR 4.
I-(10) The MSC/VLR 4 notifies the UE-n 3 that the location registration of the UE-n 3 has ended as an acknowledgement with respect to the request for registration of location information.

By this procedure, the home location registers (52, 62) of the UE-A 2 and UE-n 3 register the fact that they are in a master-slave relationship.

Here, the request for registration of location information and acknowledgement of the request for registration of location information of procedures I-(3) and I-(10) were directly carried out between the UE-n 3 and the MSC/VLR 4, but the invention is not limited to this. This location registration may be carried out through the UE-A 2 as well.

Further, the slave mobile station registration in the above procedures I-(7), I-(8), and 1-(9) was carried out from the MSC/VLR 4 with respect to the HLR-A 5, but it may also be directly carried out from the HLR-n 6 to the HLR-A 5 as well (refer to (7') and (9') of FIG. 9). Note that in this case, the slave mobile station registration is executed before the HLR-n 6 returns a location registration request acknowledgement ACK to the MSC/VLR 4. Accordingly, the ACK must be changed to the ACK' of FIG. 9.

Note that, if the HLR-A 5 and the HLR-n 6 are the same HLR, the above procedures I-(7) and I-(9) can be omitted.

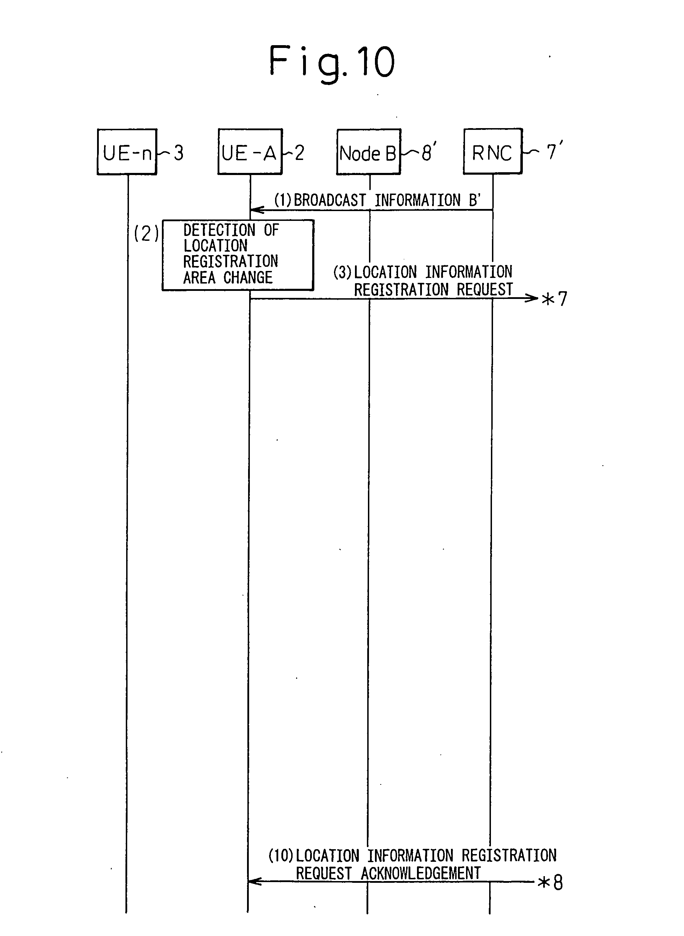

FIG. 10 is a sequential diagram for explaining a second operation mode II according to the present invention (first part); and

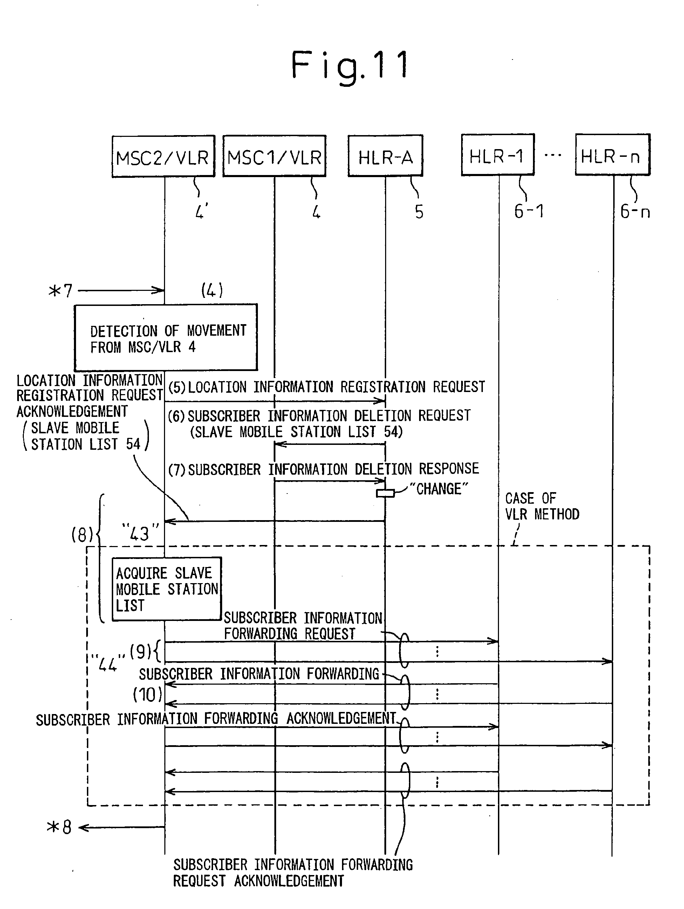

FIG. 11 is the same view as the above (second part).

### [Second Operation Mode II]

This second operation mode II is an operation mode where a master mobile station (UE-A) 2 moves under the control of another mobile switching center (MSC/VLR) 4' (FIG. 3).

Below, an explanation will be given of the procedure where a master mobile station (UE-A) 2 under the control of the MSC/VLR 4 moves together with a plurality of slave mobile stations (UE-n: n=1, 2,...) 3 to the control of another MSC/VLR 4'.
II-(1) The UE-A 2 receives the broadcast information B' from the RNC 7' (FIG. 3) under the control of another MSC/VLR 4'.
II-(2) The UE-A 2 detects the change of the location registration area (11→11') from the broadcast information B' received in the above procedure II-(1).
II-(3) The UE-A 2 transmits a request for registration of location information to the MSC/VLR 4'. Note that this request for registration of location information is exactly the same as the request for registration of location information transmitted to the mobile switching center by the mobile station in the conventional mobile communications and does not include the master mobile station information.
II-(4) The MSC/VLR 4' detects that the UE-A 2 has moved from the MSC/VLR 4 based on the request for registration of location information of the procedure II-(3).
II-(5) The MSC/VLR 4' transmits the request for registration of location information to the HLR-A 5 of the home location register of the UE-A 2 in order to change the location registration of the UE-A 2.
II-(6) The HLR-A 5 requests the MSC/VLR 4 to delete the subscriber information S of all slave mobile stations 3 having a master-slave relationship with the UE-A 2. This deletion request includes the slave mobile station list 54 (refer to FIG. 4) existing in the mobile station link information L to be referred to and is sent to the MSC/VLR 4.
II-(7) The MSC/VLR 4 receiving the slave mobile station list 54 of the procedure II-(6) deletes the subscriber information S of the slave mobile stations 3 based on that and returns a response to the subscriber information deletion request to the HLR-A 5.
II-(8) The HLR-A 5 changes the location registration of UE-A 2 and returns an acknowledgement for the request for registration of location information to the MSC/VLR 4'. At this time, the UE-A 2 is the master mobile station, so the mobile station link information L to be referred to as the slave mobile station list, that is, the list 54 of all slave mobile stations having a master-slave relationship with this UE-A 2, is sent together and acquired at the MSC/VLR 4'.
II-(9) The MSC/VLR 4' requests forwarding of the subscriber information S to the home location registers (HLR-1,..., HLR-n,...) 6-1,..., 6-n of the slave mobile stations 3 based on the slave mobile station list 54 received in the procedure II-(8).
II-(10) The subscriber information S of the slave mobile stations 3 are downloaded to the MSC/VLR 4' from the home location registers (HLR-1,..., HLR-n,...) 6-1,..., 6-n of the slave mobile stations 3. The MSC/VLR 4' receiving the information S returns an acknowledgement for the request for registration of location information to the UE-A 2 to notify it that the location registration has been completed.

By the above procedures, the subscriber information S of all slave mobile stations under the control of the master mobile station can be downloaded to the MSC/VLR 4' of the destination of movement only by the location registration of the UE-A 2 of the master mobile station.

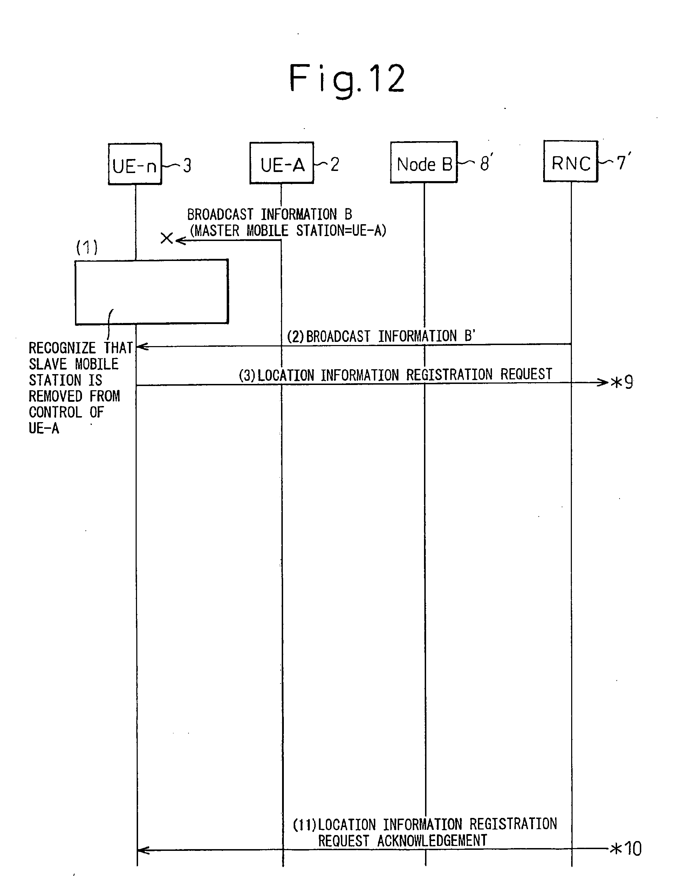

FIG. 12 is a sequential diagram for explaining a third operation mode III based on the present invention (first part); and

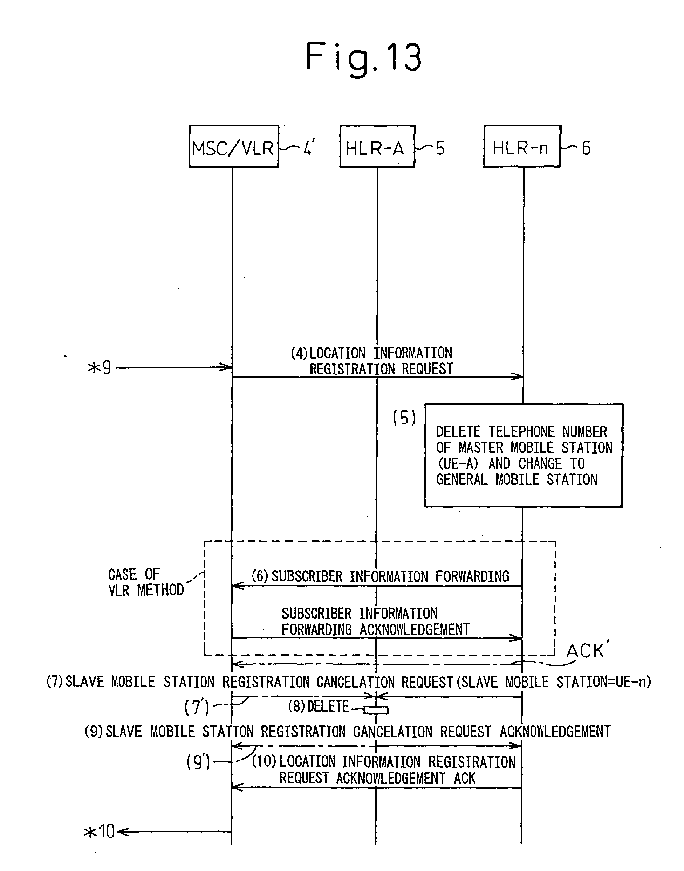

FIG. 13 is the same view as the above (second part).

### [Third Operation Mode III]

This third operation mode III is an operation mode where a slave mobile station (UE-n) 3 is taken out from a vehicle 9 equipped with a master mobile station (UE-A) 2.

Here, in the configuration of FIG. 1 and FIG. 2, the explanation will be given of the operation up until a UE-n 3 is taken out from a vehicle 9 equipped with a UE-A 2 and location registration is carried out again with respect to the HLR-A/HLR-n 5 and 6 responding to this.
III-(1) When a UE-n 3 is taken out from a vehicle 9 equipped with a UE-A 2, the UE-n 3 can no longer detect the broadcast information B from the UE-A 2, so the UE-n 3 recognizes that it has been take out from under the control of the UE-A 2.
III-(2) The UE-n 3 receives only the broadcast information B' from the RNC 7' thereof.
III-(3) The UE-n 3 transmits a request for registration of location information to the MSC/VLR 4'. The UE-n 3 has been taken away from the UE-A 2, so this request for registration of location information does not include the information of the "master mobile station".
III-(4) The MSC/VLR 4' transmits the request for registration of location information to the home location register (HLR-n) 6 holding the subscriber information S of the UE-n 3 of the origin of the request for registration of location information in the procedure III-(3). This request for registration of location information does not include the information of the "master mobile station".
III-(5) This HLR-n 6 recognizes that the UE-n 3 has been taken away from under the control of the UE-A 2 since the information of the master mobile station is not included in the request for registration of location information in the procedure III-4 and deletes the telephone number of the address information A of the master mobile station (UE-A) 2 registered in the subscriber data area (expansion area) 62 of the UE-n 3. Further, the mobile station classification information C of the UE-n 3 is changed from "slave mobile station" to "general mobile station" together with the above deletion of the telephone number.
III-(6) The subscriber information S of the UE-n 3 is downloaded from the HLR-n 6 to the VLR of the mobile switching center (MSC/VLR) 4'.
III-(7) The HLR-n 6 requests cancelation of the slave mobile station registration to the HLR-A 5. This request for cancelation includes the information of "slave mobile station = UE-n".
III-(8) The HLR-A 5 deletes the telephone number of the address information "an" of the slave mobile station (UE-n) 3 from the mobile station link information L of the UE-A 2.
III-(9) When the telephone number of the slave mobile station (UE-n) 3 explained above finishes being deleted, the HLR-A 5 returns an acknowledgement for the slave mobile station registration cancelation request to the HLR-n 6.
III-(10) The HLR-n 6 returns an acknowledgement for the request for registration of location information to the MSC/VLR 4'.
III-(11) The MSC/VLR 4' notifies the UE-n 3 that the location registration in the location registration area under the control of the MSC/VLR 4' has been completed and the cancelation of registration of the slave mobile station (UE-n) has ended by the acknowledgement of the request for registration of location information.

By the above procedures, the information of the master-slave relationship, that is, the mobile station link information L, is deleted from the home location registers (52, 62) of the UE-A 2 and UE-n 3.

Further, the cancelation of the slave mobile station registration in the procedures III-(7), (8), and (9) was directly carried out from the HLR-n 6 to the HLR-A 5, but the invention is not limited to this. The cancelation may be carried out with respect to the HLR-A 5 through the MSC/VLR 4' from the HLR-n 6 as well (refer to (7') and (9') of FIG. 13). Note that it is necessary to change the ACK of (10) in the same figure to the illustrated ACK'.

Note that if the HLR-A 5 and the HLR-n 6 are the same HLR, the procedures III-(7) and (9) can be omitted.

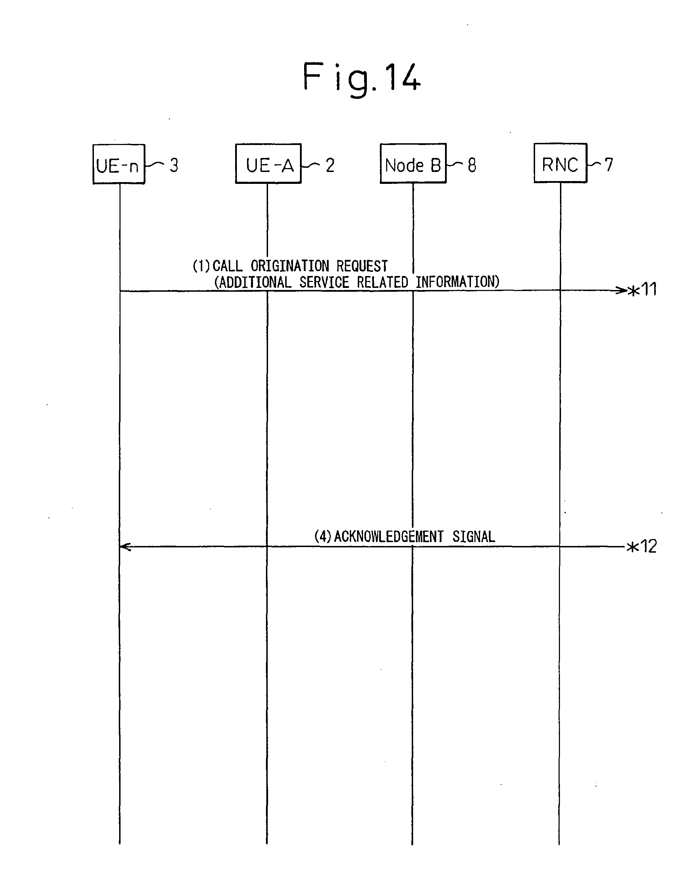

FIG. 14 is a sequential diagram for explaining a fourth operation mode IV based on the present invention (first part); and

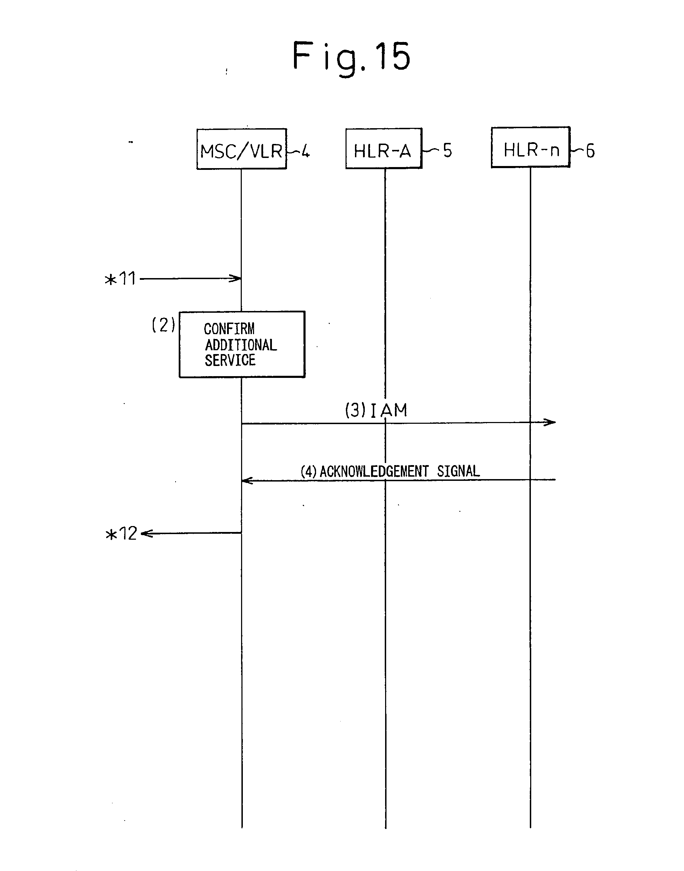

FIG. 15 is the same view as the above (second part).

### [Fourth Operation Mode IV]

This fourth operation mode IV is an operation mode where a call is originated from a slave mobile station (UE-n) 3.

Note that, in the configuration of FIG. 1 and FIG. 2, regardless of whether the UE-n 3 is in a master-slave relationship with the UE-A 2 or not, the call origination procedure here can be carried out as in the conventional case. This is because, by the procedure I-(6) of the case where a mobile station UE-n is carried into a vehicle equipped with a UE-A, the procedure II-(10) of the case where the UE-A moves under the control of another MSC and the procedure III-(6) of the case where a slave mobile station UE-n is taken out from a vehicle equipped with a UE-A, the subscriber information S of the UE-n 3 is downloaded from the HLR-n 6 to the MSC/VLR 4 and 4' to which this UE-n 3 is visiting.
IV-(1) A path is established between the UE-n 3 and the MSC/VLR 4, the the UE-n3 requests call origination to the MSC/VLR 4. The call origination request at this time includes information related to additional services etc. other than the destination address information (telephone number). The "additional services" include "Service Profile", "Service Specific Information", etc. (refer to 61 of FIG. 6) for each mobile station and indicates for example if this mobile station can receive a mail service or if speech by three parties can be carried out.
IV-(2) The MSC/VLR 4 receiving this call origination request confirms whether or not the "additional service" information existing in the call origination request in the procedure IV-(1) matches contract information of the user of the mobile station based on the subscriber information S of the UE-n 3 downloaded from the HLR-n 6.
IV-(3) After the confirmation by the procedure IV-(2), the MSC/VLR 4 transmits an IAM (Initial Address Message) signal to the network on the call reception side acknowledging the call origination request in the procedure IV-(1).
IV-(4) When the UE-n 3 receives an acknowledgement signal from the call reception side subscriber through the MSC/VLR 4, speech between the two becomes possible.

In general, in a call origination procedure, the confirmation of the information related to additional services in the MSC/VLR 4 is important. In the present invention as well, the subscriber information S of the UE-n 3 is downloaded to the MSC/VLR 4 from the HLR-n 6 irrespective of the existence or not existence of the master-slave relationship. Therefore, in the MSC/VLR 4, confirmation of information relating to additional services is possible, and the usual call origination procedure of general mobile communications can be followed as it is. That is, the sequences of FIG. 14 and FIG. 15 are also the sequences as in the conventional system.

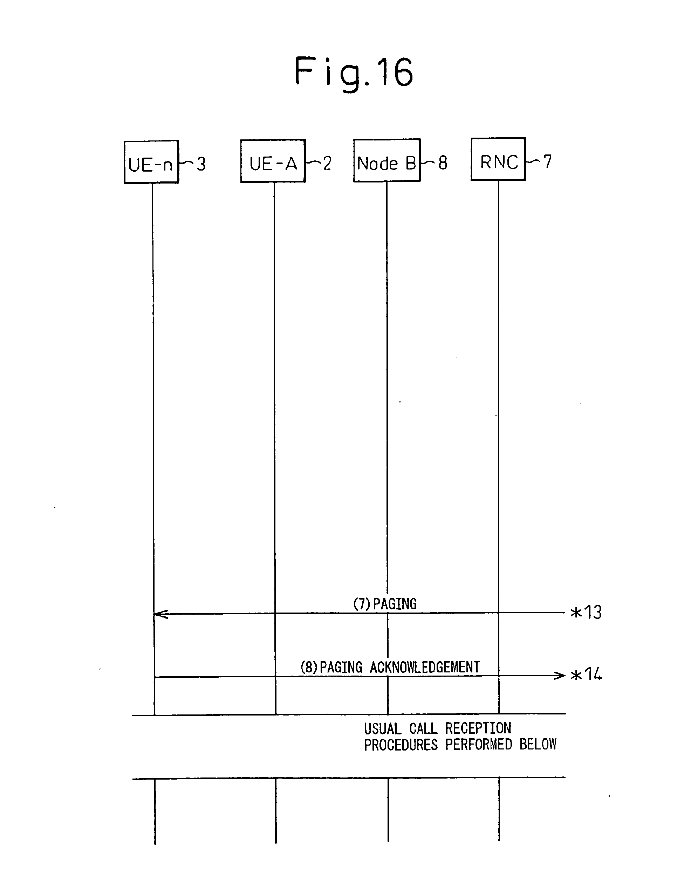

FIG. 16 is a sequential diagram for explaining a fifth operation mode V based on the present invention (first part); and

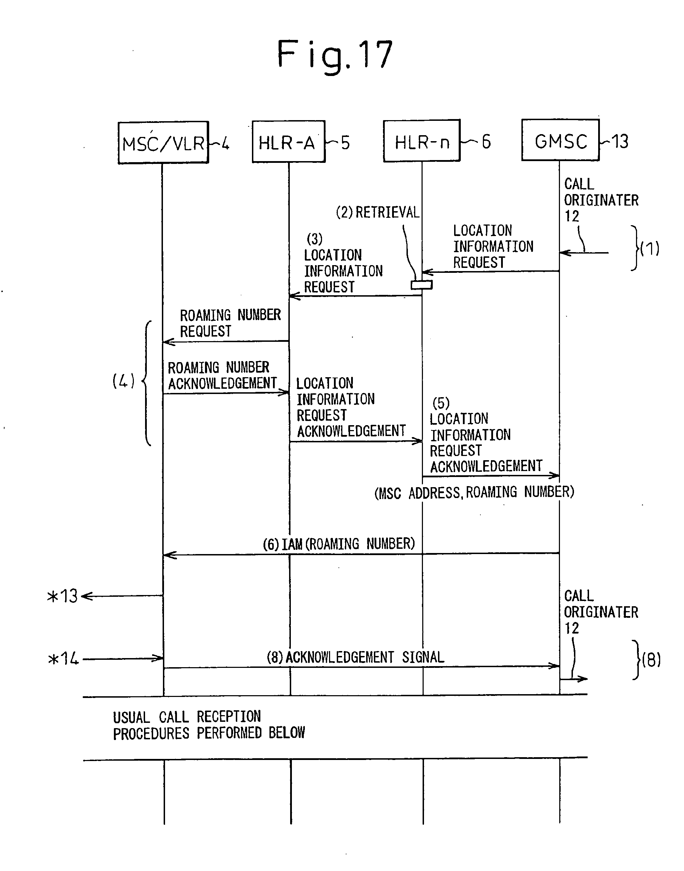

FIG. 17 is the same view as the above (second part).

### [Fifth Operation Mode V]

This fifth operation mode is an operation mode of the case of call reception at a slave mobile station (UE-n) 3.

Here, in the configuration of FIG. 1 and FIG. 2, the explanation will be given of the call reception procedure of a case where a UE-n 3 is under the control of the UE-A 2, that is, where the UE-n 3 and the UE-A 2 are in a master-slave relationship. Note that, the procedure in the case where the UE-n 3 and the UE-A 2 are not in a master-slave relationship is the same as the call reception procedure of conventional mobile communications (refer to the call reception procedure of FIG. 6 and FIG. 7).
V-(1) When there is a call received from a call originator 12 at a UE-n 3, a location information request is transmitted from the gateway mobile switching center (GMSC) 13 to the HLR-n 6.
V-(2) The HLR-n 6 receiving the request retrieves the subscriber information S of the UE-n 3 and the mobile station link information L. In this case, it detects that the mobile station classification of the UE-n 3 is a "slave mobile station" and that the master mobile station thereof is the UE-A 2. Here, the location information of the UE-n 3 is ignored. This is because the UE-n 3 is slaved to the master mobile station.
V-(3) The HLR-n 6 further transmits the location information request to the HLR-A 5 of the home location register of the master mobile station (UE-A) 2.
V-(4) The HLR-A 5 receiving the request retrieves the location information of the UE-A 2 and notifies the MSC address of the UE-A 2 (refer to 51 of FIG. 4) to the HLR-n 6 in the acknowledgement for the location information request.
V-(5) The HLR-n 6 receiving the notification transmits the MSC address obtained in the procedure V-(4) to the gateway mobile switching center (GMSC) 13 in the acknowledgement of the location information request.
V-(6) The gateway mobile switching center (GMSC) 13 receiving the transmission transmits an IAM signal to the MSC/VLR 4 which the UE-n3 is visiting based on the MSC address-received in the procedure V-(5).
V-(7) The MSC/VLR4 receiving the transmission pages the UE-n 3.
V-(8) When the paged UE-n 3 returns an acknowledgement signal to the call originator through the MSC/VLR 4 and the gateway mobile switching center (GMSC) 13, speech between the two becomes possible.

As described above, call reception at the UE-n 3 becomes possible by the gateway mobile switching center (GMSC) 13 when the GMSC 13 obtains the location information of the UE-A 2 from the HLR-A 5 through the HLR-n 6 as location information of the UE-n 3 and pages this UE-n 3 through the MSC/VLR 4 identified by this location information.

The explanation was given of various operation modes I to V by referring to FIG. 8 to FIG. 17. An example of a representative sequence wherein various means 21, 31, 32, 41 to 42, 53, and 63 shown in FIG. 1 function among these operations will be explained below.

The broadcast information transmitting means 21 functions when executing the procedure (2) of FIG. 8 and transmits the broadcast information B and the priority flag F to the slave mobile stations 3 in a vehicle 9.

The link maintaining means 31 functions after executing the procedure (3) of FIG. 8 and prohibits requests for registration of location information from the slave mobile stations 3 to the mobile switching centers 4 and 4' so long as the broadcast information B is detected.

The location registration requesting means 32 requests registration of location information described above and executes the procedure (3) of FIG. 8.

The mobile station link information forwarding means 41 functions when executing the procedure (4) of FIG. 9 and forwards at least the master mobile station address information A to the HLR's 6 of the slave mobile stations.

The mobile station information forwarding means 42 functions when executing the procedure (7) of FIG. 9 and forwards the address information "an" of the slave mobile stations to the HLR 5 of this master mobile station together with information of the master mobile station 2 with which they are linked.

The slave mobile station list acquisition means 43 functions when executing the procedure (8) of FIG. 11 and acquires the slave mobile station list 54 (FIG. 4) from the HLR 5 of the master mobile station with which it is linked.

The slave mobile station information acquisition means 44 functions when executing the procedure (9) of FIG. 11 and acquires the subscriber information S shown in FIG. 5 from the HLR's 6 of all slave mobile stations listed in the slave mobile station list 54.

The slave mobile station list forwarding means 53 is paired with the slave mobile station list request means 43 and functions for executing the procedure (8) of FIG. 11.

The slave mobile station information transmitting means 63 functions when executing the procedure (6) of FIG. 9 and transmits the subscriber information S for the slave mobile stations 3 to the mobile switching center (MSC/VLR) 4.

Among the above various means, the means 21 is installed in the master mobile station 2, and the means 31 and 32 are installed in the slave mobile stations 3. These means and the components other than these will be explained in further detail for the master mobile station 2 and a slave mobile station 3.

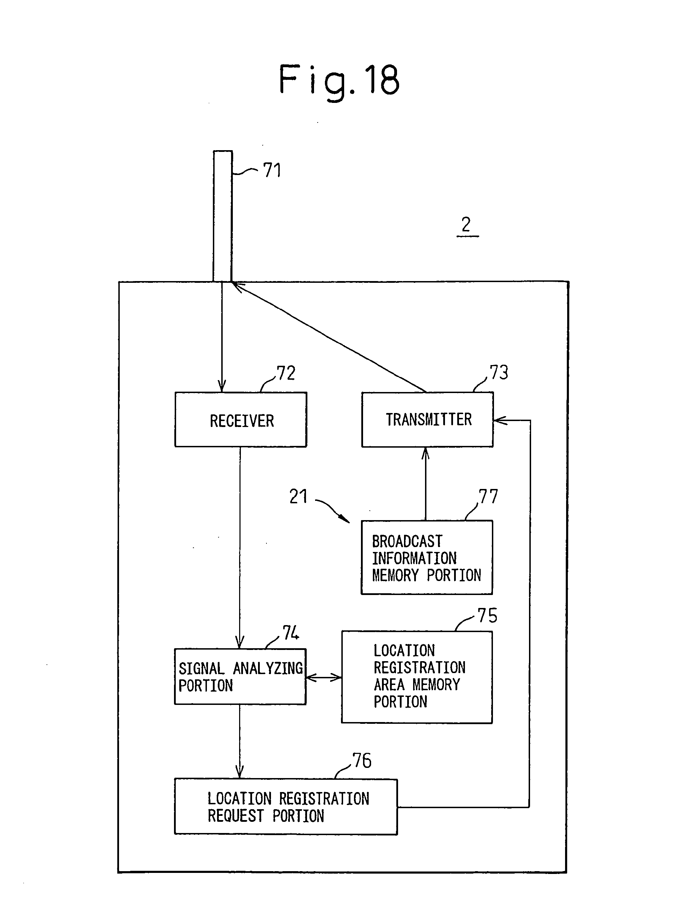

FIG. 18 is a diagram showing an example of the basic configuration of the master mobile station 2; and

FIG. 19 is a diagram showing an example of the basic configuration of a slave mobile station 3.

Referring to FIG. 18 first, an explanation will be given here of the transmission of the broadcast information B of the master mobile station 2 and the location registration request when the master mobile station moves.

A master mobile station 2 disposed in a vehicle 9 such as train or bus generates the broadcast information B including the address information A of "master mobile station = UE-A" in the master mobile station ID signal stored in a broadcast information memory portion 77 and periodically transmits this broadcast information B via a transmitter 73 from an antenna 71. In this way, the broadcast information B is transmitted.

When the master mobile station 2 moves while bridging the location registration areas (11, 11'), the master mobile station 2 receives the broadcast information B' from the RNC 7' at the antenna 71. Thereafter, the broadcast information B' is sent to a signal analyzing portion 74 through the receiver 72. This signal analyzing portion 74 detects the location registration area information from the broadcast information B' from the RNC' and compares the information detected from this broadcast information B' and the location registration area information stored in the location registration area memory portion 75. When the result of the comparison is that the two are different, it rewrites the location registration area information in the location registration area memory portion 75. Further, the location registration request portion 76 carries out the location registration request of this master mobile station 2 to the RNC 7' through the transmitter 73 and the antenna 71. In this way, the location registration request of the master mobile station 2 is carried out.

Refer to FIG. 19 next. Here, an explanation will be mainly given of the reception of the broadcast information B in a slave mobile station 3 and the location registration request when the slave mobile station 3 is taken out from under the control of the master mobile station 2.

When a slave mobile station 3 is carried into a vehicle 9 such as a train or a bus equipped with a master mobile station 2, the broadcast information B transmitted by the master mobile station 2 is received at a receiver 82 through an antenna 81. Thereafter, a signal analyzing portion 84 detects the master mobile station information (A) from the information B and compares the information (A) and the location registration area information or the master mobile station information (A') stored in a location registration area memory portion 85. When the result of the comparison is that the two are different, it rewrites the location registration area information or the master mobile station information of the location registration area memory portion 85. Further, a location registration request portion 86 sends a signal including the information of the "master mobile station = UE-A" to the RNC 7' through the transmitter 83 and the antenna 81 and requests the location registration of this slave mobile station. In this way, the reception of the broadcast information B from the master mobile station and the location registration request are executed.

Further, when a slave mobile station 3 is removed from a vehicle 9 such as a train or a bus equipped with a master mobile station 2 and therefore the slave mobile station 3 is removed from under the control of this master mobile station 2, the slave mobile station 3 receives the broadcast information B' from the RNC' at the receiver 82 via the antenna 81. Thereafter, the signal analyzing portion 84 detects the location registration area information from the broadcast information B' from the RNC 7'. It compares this detected location registration area information and the location registration area information stored in the location registration area memory portion 85 and, when the two are different, writes the location registration area information in the location registration area memory portion 85. Further, the location registration request portion 86 requests the location registration of this slave mobile station 3 to the RNC7' through the transmitter 83 and the antenna 81. The location registration request at this time does not include any master mobile station information, therefore no master-slave relationship is formed. In this way, the location registration request when the slave mobile station 3 is removed from the control of the master mobile station 2 is carried out.

Note that, in FIG. 8 to FIG. 19, the explanation was mainly given of the VLR method, but the present invention can be realized even by the HLR method omitting the download to the VLR.

When summarizing the above, the location registration method in the mobile communications system according to the present invention has the following steps.

Namely, they are a first step of receiving a location registration request from a second mobile station entering under the control of a first mobile station, a second step of linking the first mobile station and the second mobile station in accordance with the location registration request from the second mobile station, a third step of receiving subscriber information of the second mobile station corresponding to the link, and a fourth step of controlling the communication with respect to the second mobile station based on the received subscriber information of the second mobile station.

Further, it has a fifth step of finding a second mobile station linked with the first mobile station when receiving a location registration request from the first mobile station, a sixth step of receiving the subscriber information of the found second mobile station, and a seventh step of controlling the communication with respect to the second mobile station based on the received subscriber information of the second mobile station.

Further, the mobile communications system 1 according to the present invention is provided with a first means for receiving a location registration request from a second mobile station entering under the control of a first mobile station, a second means for linking the first mobile station and the second mobile station responding to a location registration request from the second mobile station, a third means for receiving the subscriber information of the second mobile station corresponding to the link, and a fourth means for controlling communication with respect to the second mobile station based on the received subscriber information of the second mobile station.

Further, the mobile communications system is provided with a fifth means for finding a second mobile station linked with a first mobile station when receiving a location registration request from the first mobile station, a sixth means for receiving subscriber information of the found second mobile station, and a seventh means for controlling communication with respect to the second mobile station based on the received subscriber information of the second mobile station.

As explained in detail above, according to the present invention, a concrete and practical technique of replacing location registrations of a plurality of mobile stations with location registration of one master mobile station is realized, and a mobile communications system can be practically configured eliminating the need for individual location registration with respect to the network by all mobile stations in a vehicle at the point of time when they bridge location registration areas in the case where there are a plurality of mobile stations in a vehicle such as a train or a bus and they uniformly move bridging the location registration areas.

By reducing the number of the generated location registrations of the individual mobile stations in this way, the wireless resources (wireless bands) of cells which the mobile stations are visiting can be efficiently utilized.

Accordingly, in mobile communications systems, in which the number of the mobile stations is continuously increasing, the limited wireless bands between the mobile stations and a base station can be efficiently utilized and higher grade service can be provided to a larger number of users.

## Claims

1. A master mobile station provided in a moving body moving together with a slave mobile station,
**characterized in that**:
provision is made of a broadcast information transmitting function unit for transmitting to said slave mobile station broadcast information for broadcasting that the slave mobile station is slaved to a master mobile station, and
the broadcast information transmitting function unit generates said broadcast information including master mobile station address information for identifying the master mobile station.

2. A master mobile station as set forth in claim 1, **characterized in that** the broadcast information from said master mobile station further includes a priority flag, and the priority flag is a flag for indicating that the broadcast information from the master mobile station must be selected with priority when a plurality of broadcast information compete.

3. A slave mobile station moving together with a moving body provided with a master mobile station,
**characterized in that**:
provision is made of a link maintaining function unit for maintaining a link with the master mobile station when detecting broadcast information from said master mobile station.

4. A slave mobile station as set forth in claim 3, **characterized in that** provision is made of a location registration requesting function unit for transmitting a request for registration of location information for requesting registration of the location information of the slave mobile station including the master mobile station address information of the master mobile station to the corresponding mobile switching center when detecting said broadcast information from said master mobile station.

5. A slave mobile station as set forth in claim 3, **characterized in that** said link maintaining function unit prohibits a request for registration of location information in response to other broadcast information even when other broadcast information other than the broadcast information is received so long as said broadcast information from said master mobile station is detected.

6. A home location register for holding subscriber information concerning a slave mobile station moving together with a moving body provided with a master mobile station, **characterized in that**:
an expansion area for holding mobile station link information is further added; and
the mobile station link information includes at least address information of said master mobile station with which said slave mobile station is to be linked.

7. A home location register as set forth in claim 6, **characterized in that** said mobile station link information further includes mobile station classification information indicating whether a mobile station is a master mobile station, slave mobile station, or general mobile station not any of the same.

8. A home location register as set forth in claim 6, **characterized in that** provision is further made of a slave mobile station information transmitting function unit for transmitting subscriber information of said slave mobile station to a mobile switching center receiving a request for registration of location information from said slave mobile station.

9. A home location register for holding subscriber information concerning a master mobile station provided in a moving body moving together with a slave mobile station, **characterized in that**:
an expansion area for holding the mobile station link information is further added; and
the mobile station link information further includes at least address information of a slave mobile station to be linked with said master mobile station.

10. A home location register as set forth in claim 9, **characterized in that** said mobile station link information further includes mobile station classification information indicating whether a mobile station is a master mobile station, slave mobile station, or general mobile station not any of the same.

11. A home location register as set forth in claim 9, **characterized by** holding said address information of the slave mobile station obtained from said mobile switching center coresponding to a slave mobile station registration request from the mobile switching center receiving a request for registration of location information from said slave mobile station.

12. A home location register as set forth in claim 9, **characterized by** directly obtaining said address information of the mobile station from a home location register of said slave mobile station and holding this information.

13. A home location register as set forth in claim 9, **characterized in that** provision is further made of a slave mobile station list forwarding function unit for transmitting a list including the held address information of a slave mobile station to another mobile switching center when said master mobile station moves and requests registration of location information to said another mobile switching center.

14. A mobile switching center **characterized in that**: provision is made of a mobile station link information forwarding function unit for receiving a request for registration of location information from a slave mobile station moving together with a master mobile station and forwarding address information of the master mobile station with which the slave mobile station is be linked to a home location register of the slave mobile station.

15. A mobile switching center as set forth in claim 14, **characterized in that** provision is further made of a slave mobile station information forwarding function unit for forwarding address information of said slave mobile station to a home location register of said master mobile station due to a request for registration of said location information.

16. A mobile switching center as set forth in claim 14, **characterized in that** provision is further made of a slave mobile station list acquisition function unit for receiving a request for registration of location information newly transmitted from the master mobile station along with movement of said master mobile station and acquiring a list of slave mobile stations to be linked with the master mobile station from the home location register of the master mobile station.

17. A mobile switching center as set forth in claim 16, **characterized in that** provision is further made of a slave mobile station subscriber information acquisition function unit for acquiring subscriber information of a slave mobile station from a home location register of the slave mobile station based on the acquired list of said slave mobile stations.

18. A method of location registration in a mobile communications system, **characterized by** comprising:
receiving a location registration request from a second mobile station entering under the control of a first mobile station;
linking the first mobile station and the second mobile station in accordance with said location registration request from the second mobile station;
receiving subscriber information of the second mobile station corresponding to said link; and
controlling communication with respect to the second mobile station based on the received subscriber information of the second mobile station.

19. A method of location registration in a mobile communications system as set forth in claim 18, **characterized by** further comprising:
finding a second mobile station related with the first mobile station when receiving a location registration request from the first mobile station;
receiving the subscriber information of the found second mobile station; and
controlling communication with respect to the second mobile station based on the received subscriber information of the second mobile station

20. A mobile communications system **characterized by** comprising:
a function unit of receiving a location registration request from a second mobile station entering under the control of a first mobile station;
a function unit of linking the first mobile station and the second mobile station responding to said location registration request from the second mobile station;
a function unit of receiving subscriber information of the second mobile station corresponding to said link; and
a function unit of controlling communication with respect to the second mobile station based on the received subscriber information of the second mobile station.

21. A mobile communications system as set forth in claim 20, **characterized by** further comprising:
a function unit of finding a second mobile station linked with the first mobile station when receiving a location registration request from the first mobile station;
a function unit of receiving subscriber information of the found second mobile station; and
a function unit of controlling communication with respect to the second mobile station based on the received subscriber information of the second mobile station.
